# EUROPÄISCHE PATENTSCHRIFT

(11) **EP 2 691 465 B1**
(45) Veröffentlichungstag und Bekanntmachung des Hinweises auf die Patenterteilung: **09.09.2015**
(21) Anmeldenummer: 12709649.3
(22) Anmeldetag: 22.03.2012
(51) Int. Cl.: C08L 75/04

(54) **LATENT REAKTIVE POLYURETHANDISPERSION MIT AKTIVIERBARER VERNETZUNG**
LATENT-REACTIVE POLYURETHANE DISPERSION WITH ACTIVATABLE CROSSLINKING
DISPERSION DE POLYURÉTHANE RÉACTIF LATENT À RÉTICULATION ACTIVABLE

(30) Priorität: 30.03.2011 EP 11160326
(43) Veröffentlichungstag der Anmeldung: 05.02.2014
(73) Patentinhaber: BASF SE, 67056 Ludwigshafen (DE)
(72) Erfinder: MEYER, Axel, 69115 Heidelberg (DE); HECHAVARRIA FONSECA, Maria Teresa, 68305 Mannheim (DE); SCHRÖDER-GRIMONPONT, Tina, 76764 Rheinzabern (DE); DAHMEN, Stefan, 67251 Freinsheim (DE); BEIL, Christian, 67551 Worms (DE); SCHUMACHER, Karl-Heinz, 67433 Neustadt (DE); ABEND, Thomas, CH-6605 Locarno-Monti (CH)
(86) Internationale Anmeldenummer: PCT/EP2012/055066
(87) Internationale Veröffentlichungsnummer: WO 2012/130711

(56) Entgegenhaltungen:
- EP-B1- 0 171 015
- WO-A1-00/39186
- WO-A1-97/18257

## Beschreibung

Die Erfindung betrifft eine wässrige Polymerdispersion, enthaltend mindestens ein in wässriger Phase dispergiertes Polyurethan mit einer oder mehreren Uretdiongruppen und mindestens ein festes Polyamin mit desaktivierter Oberfläche. Die Polymerdispersion kann als Klebstoff, Beschichtungsmittel oder Dichtungsmittel oder zur Herstellung von Klebstoff-, Beschichtungs- oder Dichtungszusammensetzungen verwendet werden.

Wässrige Polymerdispersionen auf Basis von Polyurethanen werden für verschiedene Anwendungszwecke eingesetzt, z.B. als Klebstoff, Beschichtungsmittel oder Dichtungsmittel oder zur Herstellung von Klebstoff-, Beschichtungs- oder Dichtungszusammensetzungen. Die hierbei eingesetzten Polyurethane sind zunächst einmal linear, können aber zur Verbesserung der anwendungstechnischen Eigenschaften mit einem geeigneten Vernetzungssystem verzweigt oder vernetzt werden.

In der WO97/18257 werden wässrige Polyurethandispersionen beschrieben, wobei die Polyurethane Uretdiongruppen aufweisen. Die Uretdiongruppen werden durch Verwendung von Polyisocyanatdimeren in die Polymerkette eingebaut. Durch Reaktion mit geeigneten reaktiven Polyaminverbindungen wie z.B. primären oder sekundären Diaminen, Hydrazinen oder Polyhydraziden kann eine Vernetzungsreaktion erfolgen.

Der Zusatz der in WO97/18257 beschriebenen Polyaminverbindungen zu uretdionhaltigen Polyurethandispersionen führt durch vorzeitige Vernetzung sowie pH-Änderung zu einer starken Erhöhung der Viskosität der Polyurethandispersionen und damit zu einer beschränkten Anwendungszeit. Die einsetzende Viskositätserhöhung kann zu Komplikationen bei der nachfolgenden Beschichtung von Substraten führen. Eine zu hohe Viskosität beeinträchtigt die Auftragbarkeit der Massen. Derartige Systeme sind somit nicht als einkomponentige, lagerfähige, einfach aktivierbare Systeme einsetzbar.

Die Aufgabe der vorliegenden Erfindung war die Entwicklung einer latent reaktiven, für Beschichtungs-, Klebe- oder Dichtungsanwendungen geeigneten Polyurethandispersion mit aktivierbarer Vernetzung. Dabei sollte die Topfzeit, d.h. das für eine gute Verarbeitbarkeit zur Verfügung stehende Zeitfenster möglichst verlängert sein, die Herstellung von 1K-Systemen mit möglichst langer Lagerfähigkeit ermöglicht werden, die Herstellung von aktivierbaren, vorbeschichteten Folien und anderen Substraten möglich sein, eine flexiblere Gestaltung von Beschichtungsverfahren und/oder die Verwendung von wässrigen Dispersionen mit höheren Feststoffgehalten und damit verbunden verkürzten Trocknungszeiten ermöglicht werden.

Gegenstand der Erfindung ist eine wässrige Polymerdispersion, enthaltend
a) mindestens ein in wässriger Phase dispergiertes Polyurethan mit einer oder mehreren Uretdiorigruppen, und
b) mindestens ein festes Polyamin mit desaktivierter Oberfläche, wobei das feste Polyamin einen Schmelzpunkt von größer oder gleich 30 °C aufweist und wobei das feste Polyamin mit desaktivierter Oberfläche partikelförmig vorliegt und ein Teil der Aminogruppen durch Reaktion mit gegenüber Aminogruppen reaktiven Stoffen umgesetzt wurde. Die im Folgenden beschriebenen erfindungsgemäßen Polyurethandispersionen könnenals Primärdispersion zur Herstellung von Formulierungen, wie Beschichtungsmitteln, Dichtungsmitteln oder Klebstoffen, eingesetzt werden. Sie lassen sich vorteilhafterweise in der Regel auch in eine feste Form, z.B. ein Pulver, überführen, das sich leicht zu einer Sekundärdispersion redispergieren und so in eine Formulierung, wie ein Beschichtungsmittel, ein Dichtungsmittel oder einen Klebstoff, einarbeiten lässt.

Die erfindungsgemäßen Polyurethandispersionen enthalten wenigstens ein Polyurethan. Geeignete Polyurethane sind prinzipiell durch Umsetzung wenigstens eines Polyisocyanats mit wenigstens einer Verbindung, die mindestens zwei gegenüber Isocyanatgruppen reaktive Gruppen aufweist, erhältlich. Erfindungsgemäße Polyurethane umfassen auch sogenannte Polyurethan-Polyharnstoffe, welche neben Polyurethangruppen auch noch Hamstoffgruppen aufweisen. Geeignet sind z.B. Polyurethan-polyharnstoffe, die in ihrem Molekülverband statistisch verteilte Uretdiongruppen aufweisen, wie sie beispielsweise in der DE 2221170 beschrieben werden.
Bevorzugt enthält die erfindungsgemäße Polyurethandispersion wenigstens ein Polyurethan, das wenigstens ein Polyisocyanat und wenigstens ein polymeres Polyol einpolymerisiert enthält. Insbesondere kann das Polyurethan gebildet sein aus wenigstens einem Polyisocyanat, wenigsten einem Polyisocyanaturetdion und wenigstens einem polymeren Polyol. Geeignete polymere Polyole sind vorzugsweise ausgewählt unter Polyesterdiolen, Polyetherdiolen und Gemischen davon. Das polymere Polyol weist vorzugsweise ein zahlenmittleres Molekulargewicht im Bereich von etwa 500 bis 5000 g/mol auf. Bevorzugt sind polymere Diole. Bevorzugt enthält die erfindungsgemäße Polyurethandispersion wenigstens ein Polyurethan, das wenigstens ein Polyisocyanat und eine Diolkomponente einpolymerisiert enthält, von denen a) 10 -100 mol-% bezogen auf die Gesamtmenge der Diole, ein Molekulargewicht von 500 bis 5000 g/mol aufweisen und b) 0 - 90 mol-% bezogen auf die Gesamtmenge der Diole, ein Molekulargewicht von 60 bis 500 g/mol aufweisen.
Vorzugsweise ist das Polyurethan zu mindestens 40 Gew.-%, besonders bevorzugt zu mindestens 60 Gew.-% und ganz besonders bevorzugt zu mindestens 80 Gew.-%, bezogen auf das Gesamtgewicht der zur Herstellung des Polyurethans eingesetzten Monomere, aus wenigstens einem Diisocyanat und wenigstens einem Polyetherdiol und/oder Polyesterdiol aufgebaut. Geeignete weitere Aufbaukomponenten ad 100 Gew.-% sind z.B. die im Folgenden aufgeführten Polyisocyanate mit wenigstens drei NCO-Gruppen und von den polymeren Polyolen verschiedene Verbindungen mit wenigstens zwei gegenüber Isocyanatgruppen reaktiven Gruppen. Dazu zählen z.B. Diole; Diamine; von polymeren Polyolen verschiedene Polymerisate mit mindestens zwei aktiven Wasserstoffatomen pro Molekül; Verbindungen, die zwei aktive Wasserstoffatome und mindestens eine ionogene bzw. ionische Gruppe pro Molekül aufweisen; und Mischungen davon.

Vorzugsweise hat das Polyurethan einen Erweichungspunkt oder Schmelzpunkt im Bereich von -50 bis 150 °C, besonders bevorzugt von 0 bis 100 °C, und ganz besonders bevorzugt von 10 bis 90 °C. Besonders bevorzugt hat das Polyurethan einen Schmelzpunkt im vorstehenden Temperaturbereich.

Bevorzugte Polyurethane sind aufgebaut aus:
a) wenigstens einem monomeren Düsocyanat,
b) wenigstens einem Diol, wobei die Komponente (b) wenigstens ein Diol mit einem zahlenmittleren Molekulargewicht im Bereich von 500 bis 5000 g/mol aufweist,
c) wenigstens einem von den Monomeren (a) und (b) verschiedenen Monomer mit wenigstens einer Isocyanatgruppe oder wenigstens einer gegenüber Isocyanatgruppen reaktiven Gruppe, das darüber hinaus wenigstens eine hydrophile Gruppe oder eine potentiell hydrophile Gruppe trägt,
d) wenigstens einem Polyisocyanaturetdion, vorzugsweise mindestens einem Diisocyanaturetdion,
e) optional wenigstens einer weiteren, von den Monomeren (a) bis (d) verschiedenen Verbindung mit wenigstens zwei reaktiven Gruppen, die ausgewählt sind unter alkoholischen Hydroxylgruppen, primären oder sekundäre Aminogruppen oder Isocyanatgruppen, und
f) optional wenigstens einer von den Monomeren (a) bis (e) verschiedenen einwertigen Verbindung mit einer reaktiven Gruppe, bei der es sich um eine alkoholische Hydroxylgruppe, eine primäre oder sekundäre Aminogruppe oder eine Isocyanatgruppe handelt.

Die Komponente b) besteht vorzugsweise aus
b₁₎ 10 bis 100 mol-%, bezogen auf die Gesamtmenge der Komponente b), Diole, die ein Molekulargewicht von 500 bis 5000 g/mol aufweisen,
b₂₎ 0 bis 90 mol-%, bezogen auf die Gesamtmenge der Komponente b), Diole, die ein Molekulargewicht von 60 bis weniger als 500 g/mol aufweisen.
Besonders bevorzugt beträgt das Verhältnis der Diole b₁) zu den Monomeren b₂) 0,1 : 1 bis 5:1, besonders bevorzugt 0,2 1 bis 2 : 1. Insbesondere ist das Diol b) ausgewählt aus Polytetrahydrofuran, Polypropylenoxid und Polyesterdiolen, ausgewählt aus Umsetzungsprodukten zweiwertiger Alkohole mit zweiwertigen Carbonsäuren und Polyesterdiolen auf Lacton-Basis.

Insbesondere zu nennen sind als Monomere (a) Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyänatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanatodiphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Derartige Diisocyanate sind im Handel erhältlich.

Als Gemische dieser Isocyanate sind besonders die Mischungen der jeweiligen Strukturisomeren von Düsocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol, und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 1:9 bis 9:1, insbesondere 4 : 1 bis 1 : 4 beträgt.

Bei den Diolen (b1) kann es sich um Polyesterpolyole handeln, die z. B. aus Ullmanns Enzyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Als zweiwertige Alkohole kommen z. B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bei den Diolen (b1) kann es sich auch um Polycarbonat-Diole handeln, wie sie z. B. durch Umsetzung von Phosgen mit einem Überschuss von den als Aufbaukomponenten für die Polyesterpolyole genannten niedermolekularen Alkohole erhalten werden können, in Betracht.

Bei den Diolen (b1) kann es sich auch um Polyesterdiole auf Lacton-Basis handeln, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-γ-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bei den Diolen (b1) kann es sich auch um Polyetherdiole handeln. Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polyetherdiole eines Molekulargewichts von 500 bis 5000, und vor allem 600 bis 4500. Ein besonders bevorzugtes Polyetherdiol ist Polytetrahydrofuran. Geeignete Polytetrahydrofurane können durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt. Geeignete Verbindungen b1) sind auch α,ω-Diaminopolyether, die durch Aminierung von Polyalkylenoxiden mit Ammoniak herstellbar sind.

Unter b₁) fallen nur Polyetherdiole, die zu weniger als 20 Gew.-%, bezogen auf ihr Gesamtgewicht, aus Ethylenoxid bestehen. Polyetherdiole mit mindestens 20 Gew.-% eingebauten Ethylenoxideinheiten sind hydrophile Polyetherdiole, welche zu den Monomeren c) zählen.

Optional können als Monomere b₁) auch Polyhydroxyolefine mitverwendet werden, bevorzugt solche mit 2 endständigen Hydroxylgruppen, z. B. α,ω-Dihydroxypolybutadien, α,ω-Dihydroxypolymethacrylester oder α,ω-Dihydroxypolyacrylester als Monomere. Solche Verbindungen sind beispielsweise aus der EP-A 622 378 bekannt. Weitere geeignete Polyole sind Polyacetale, Polysiloxane und Alkydharze.

Bevorzugt handelt es sich bei mindestens 95 mol-% der Diole b₁) um Polyesterdiole und/oder Polytetrahydrofuran. Besonders bevorzugt werden als Diole b₁) ausschließlich Polyesterdiole und/oder Polytetrahydrofuran verwendet.

Die Härte und der Elastizitätsmodul der Polyurethane lassen sich erhöhen, wenn als Diole (b) neben den Diolen b₁) noch niedermolekulare Diole b₂) mit einem Molekulargewicht von etwa 60 bis 500, vorzugsweise von 62 bis 200 g/mol, eingesetzt werden.

Als Monomere b₂) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden. Als Diole b₂) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Öctan-1,8-diol und Dodecan-1,12-diol. Weiterhin bevorzugt ist Neopentylglykol.

Um die Wasserdispergierbarkeit der Polyurethane zu erreichen, enthalten die Polyurethane von den Komponenten (a), (b) und (d) verschiedene Monomere (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen öder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge der Komponenten (a) bis (f) wird im allgemeinen so bemessen, dass die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt. Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im Allgemeinen 0 bis 10, bevorzugt 0 bis 6 Gew. %, bezogen auf die Gewichtsmenge aller Monomere (a) bis (e). Bevorzugte Monomere mit nichtionischen hydrophilen Gruppen sind Polyethylenoxiddiole mit mindestens 20 Gew. % Ethylenoxid, Polyethylenoxidmonoole sowie die Reaktionsprodukte aus einem Polyethylenglykol und einem Diisocyanat, die einen endständig veretherten Polyethylenglykolrest tragen. Derartige Diisocyanate sowie Verfahren zu deren Herstellung sind in den Patentschriften US-A 3,905,929 und US-A 3,920,598 angegeben.

lonische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen. Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere (c) sind z. B. in Ullmanns Enzyklopädie der technischen Chemie, 4. Auflage, Band 19, S. 311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalky)-alky)amine, N-Hydroxyalkyl-dialkylamine, Tris-(aminoalkyl)-amine, N;N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allegemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, wie sie auch in der US 3,412,054 beschrieben sind. Insbesondere sind Verbindungen der allgemeinen Formel (C₁) 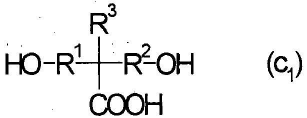 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt. Weiterhin eignen sich entsprechende Dihydroxysulfonsäuren und Dihydroxyphosphonsäuren wie 2,3-Dihydroxypropanphosphonsäure. Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit

Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen auch Aminocarbonsäuren wie Lysin, β-Alanin oder die in der DE-A 20 34 479 genannten Addukte von aliphatischen diprimären Diaminen an a,β-ungesättigte Carbon- oder Sulfonsäuren in Betracht. Solche Verbindungen gehorchen beispielsweise der Formel (C₂)

H₂N-R⁴-NH-R⁵-X (C₂)

in der R⁴ und R⁵ unabhängig voneinander für eine C₁- bis C₆-Alkandiyl-Einheit, bevorzugt für Ethylen; und X für COOH oder SO₃H stehen. Besonders bevorzugte Verbindungen der Formel (C₂) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin (TEA) Trüsopropylämin (TIPA) oder Morpholin, bzw. dessen Derivate. Besonders bevorzugt liegen die Sulfonat- oder Carboxylatgruppen in Form ihrer Salze mit einem Alkaliion oder einem Ammoniumion als Gegenion vor.

Erfindungsgemäß weist das Polyurethan eine oder mehrere Uretdiongruppen auf. Die Uretdiongruppen enthaltenden Polyurethane sind vorzugsweise dadurch erhältlich, dass bei deren Herstellung wenigstens ein Polyisocyanaturetdion (d) eingesetzt wird. Polyisocyanaturetdione sind Verbindungen, welche mindestens eine Uretdiongruppe und zwei oder mehr Isocyanatgruppen enthalten. Bevorzugt sind Düsocyanaturetdione, insbesondere die Dimeren von Diisocyanaten.

Düsocyanatdimere sind z.B. solche, bei denen die Uretdiongruppe an aromatische Kerne gebunden ist, z.B. die Dimere von Diphenylmethan-4,4'-diisocyanat, Diphenylmethan-2,4'-diisocyanat, 3,3'-Dimethyl-4,4'-diphenylmethan-diisocyanat, 4-Methyl-diphenylmethan-3,4'-diisocyanat, 2,5-Dimethyl-diphenylmethan-4,4'-diisocyanat, Diphenyl-4,4'-diisocyanat, 4-Phenoxy-3-isocyanaato-phenylisocyanat, 4-Methoxy-3-isocyanaato-phenylisocyanat, 4-Ethoxy-3-isocyanaato-phenylisocyanat, 4-Propoxy-3-isocyanaato-phenylisocyanat, 4-Methyl-3-isocyanatophenylisocyanat, 3-Methyl-4-isocyanato-phenylisocyanat, 4-Ethyl-3-isocyanato-phenylisocyanat, 4-(2-Isocyanatoethyl)-phenylisocyanat, 1,2,3,4,5,6-Hexahydro-diphenylmethan-4,4'-diisocyanat, 3-Isocyanato-phenylisocyanat, 4-(2-Isocyanato-2-methyl-ethyl)-phenylisocyanat, alpha-(1-Isocyanato-cyclöhexyl)-p-tolyl-isocyanat, 3,3',5,5'-Tetramethyl-diphenylmethan-4,4'-diisocyanat, Diphenyl-dimethylmethan-4,4'-diisocyanat.

Besonders bevorzugt sind die Diisocyanatdimere ausgewählt aus der Gruppe bestehend aus 2,4'-Diphenylmethandiisocyanat (MDI), 1,6-Hexamethylendiisocyanat (HDI), Isophorondiisocyanat (IPDI), 2,4-Toluylendiisocyanat (TDI), 1,4-Tetramethylendiisocyanat, 4,4'-Diisocyanatodicyclohexylmethan und deren Mischungen. Besonders bevorzugt sind aliphatische Diisocyanatdimere, insbesondere HDI, IPDI, 1,4-Tetramethylendiisocyanat und 4,4'-Diisocyanatodicyclohexylmethan.

Die Diisocyanatdimere können in an sich bekannter Weise durch Dimerisierung der zugrunde liegenden Diisocyanate hergestellt werden.

Die Menge an Uretdiongruppen in dem Polyurethan beträgt vorzugsweise von 0,1 bis 3 Gew.%, besonders bevorzugt von 0,5 bis 2,5 Gew.%.

Die Monomere (e), die von den Monomeren (a) bis (d) verschieden sind und welche optional auch Bestandteile des Polyurethans sind, dienen im Allgemeinen der Vernetzung oder der Kettenverlängerung. Es sind im allgemeinen mehr als zweiwertige nicht-pheriolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z. B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z. B. Monoethanolamin. Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4- Diaminocyclohexan, Aminoethylethanolamin, Hydrazin, Hydrazinhydrat oder Triamine wie Diethylentriamin oder 1,8-Diamino-4-aminomethyl-octan. Die Amine können auch in blockierter Form, z. B. in Form der entsprechenden Ketimine (siehe z. B. CA-A 1 129 128), Ketazine (vgl. z. B. die US-A 4,269,748) oder Aminsalze (siehe US-A 4,292,226) eingesetzt werden. Auch Oxazolidine, wie sie beispielsweise in, der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden. Bevorzugt werden Gemische von Diund Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (e) eines Polyamins mit mindestens 2 gegenüber Isocyanaten reaktiven Aminogruppen als Monomere (e).

Für den gleichen Zweck können auch als Monomere (e) höher als zweiwertige Isocyanate eingesetzt werden. Handelsübliche Verbindungen sind beispielsweise das Isocyanurat oder das Biuret des Hexamethylendiisocyanats.

Monomere (f), die optional mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a'-dimethylbenzylisocyanat (TMI) und Ester von Acryl- oder Methacrylsäure wie Hydroxyethylacrylat oder Hydroxyethylmethacrylat.

Beschichtungen mit einem besonders guten Eigenschaftsprofil erhält man vor allem dann, wenn als Monomere (a) im Wesentlichen nur aliphatische Diisocyanate, cycloaliphatische Diisocyanate oder araliphatische Diisocyanate eingesetzt werden. Diese Monomerkombination wird in hervorragender Weise ergänzt als Komponente (c) durch Diaminosulfonsäure-Alkali-Salze; ganz besonders durch die N-(2-Aminoethyl)-2-aminoethansulfonsäure bzw. ihre entsprechenden Alkalisalze, wobei das Na-Salz am besten geeignet ist, und eine Mischung von DETA und IPDA als Komponente (e).

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (a) bis (f) sowie ihre jeweiligen Molmengen so gewählt, dass das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können,
   0,5 1 bis 2 : 1, bevorzugt 0,8 : 1 bis 1,5 : 1, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (f) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (f) zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt.

Unter einer wässrigen Polyurethandispersion wird im Rahmen der vorliegenden Erfindung eine Dispersion verstanden, die als kontinuierliche Phase ein wässriges Lösungsmittel aufweist. Geeignete wässrige Lösungsmittel sind Wasser und Gemische aus Wasser mit wassermischbaren Lösungsmitteln, beispielsweise Alkoholen, wie Methanol, Ethanol, n-Propanol, Isopropanol, n-Butanol, sek.-Butanol, tert.-Butanol, n-Hexanol und Cyclohexanol; Glykole, wie Ethylenglykol, Propylenglykol und Butylenglykol; die Methyl- oder Ethylether der zweiwertigen Alkohole, Diethylenglykol, Triethylenglykol, Polyethylenglykole mit zahlenmittleren Molekulargewichten bis etwa 3000, Glycerin und Dioxan sowie Ketone, wie insbesondere Aceton. In einer spezielles Ausführungsform ist die Polyurethandispersion im Wesentlichen frei von organischen Lösungsmitteln. Unter "im wesentlichen frei von organischen Lösungsmitteln" wird dabei verstanden, dass der Anteil organischer Lösungsmittel höchstens 5 Gew.-%, besonders bevorzugt höchstens 1 Gew.-%, insbesondere höchstens 0,1 Gew.-%, bezogen auf das Gesamtgewicht des Lösungsmittels, beträgt.

Die Herstellung der Polyurethane erfolgt in einer bevorzugten Ausführung in Gegenwart wenigstens eines organischen Lösungsmittels. Bevorzugte organische Lösungsmittel zur Herstellung der Polyurethane sind Ketone, wie Aceton und Methylethylketon, sowie N-Methylpyrrolidon. Besonders bevorzugt wird Aceton eingesetzt. Sofern zur Herstellung der Polyurethane ein zumindest teilweise wassermischbares Lösungsmittel eingesetzt wird, kann die erfindungsgemäße Polyurethandispersion neben Wasser das zur Herstellung eingesetzte organische Lösungsmittel enthalten. Selbstverständlich kann die Herstellung der erfindungsgemäßen Polyurethandispersionen in Gegenwart wenigstens eines organischen Lösungsmittels erfolgen und dieses anschließend teilweise oder vollständig gegen Wasser ausgetauscht werden.

Die erfindungsgemäßen Polymerdispersionen enthalten mindestens ein festes Polyamin mit desaktivierter Oberfläche. Polyamine sind Verbindungen mit zwei oder mehr Aminogruppen, einschließlich Hydrazine, Hydrazide und Semicarbazide. Feste Polyamine sind erfindungsgemäß solche mit einem Schmelzpunkt von größer oder gleich 30°C, vorzugsweise größer oder gleich 60°C. Das desaktivierte Polyamin weist ebenfalls einen Schmelzpunkt von vorzugsweise mindestens 30 °C, mindestens 50°C oder größer oder gleich 60°C oder größer oder gleich 80° auf.

Die festen Polyamine liegen vorzugsweise in Form von Partikeln einer mittleren Teilchengröße von 1 bis 200 µm oder von 2 bis 50 µm oder von 3 bis 10 µm vor.

Ausgängsstoffe für die desaktivierten festen Polyamine sind alle Polyamine oder deren Gemische, die als Feststoffe vorliegen und zwei oder mehr primäre und/oder sekundäre Amingruppen aufweisen. Es kann sich um aliphatische, cycloaliphatische, araliphatische aromatische oder heterocyclische Polyamine handeln. Bevorzugte feste Polyamine sind ausgewählt aus der Gruppe bestehend aus festen aliphatischen Polyaminen, festen aromatischen Polyaminen, festen Dihydraziden, festen Semicarbaziden, festen Amin-Epoxy-Additionsverbindungen, festen aminofunktionellen Michaels-Additionsverbindungen, festen aminogruppenhaltigen Polymeren und Mischungen von zwei oder mehr dieser Polyamine, wobei die Aminogruppen primäre oder sekundäre Aminogruppen sind und das feste Polyamin einen Schmelzpunkt von mindestens 30 °C aufweist. Das Polyamin hat vorzugsweise einen Schmelzpunkt zwischen 50 und 80°C oder zwischen 55 und 70 °C.

Beispiele für geeignete feste aliphatische Diamine sind z.B. feste alpha,omega-Alkyldiamine mit mindestens 6 C-Atomen, vorzugsweise mit 8 bis 30 C-Atomen wie z.B. 1,8-Octamethylendiamin, 1,10-Decandiamin, oder 1,12-Dodecandiamine. Geeignete Dihydrazide sind z.B. Adipinsäuredihydrazid (ADDH), Isophthalsäuredihydrazid (IDH) oder Sebacinsäuredihydrazid (SDH). Ein festes aromatisches Diamin ist z.B. 4,4'-Diaminodiphenylmethan.

Feste Polyamine mit desaktivierter Oberfläche sind erfindungsgemäß solche festen Polyamine, die partikelförmig vorliegen, wobei ein Teil der Aminogruppen durch Reaktion mit gegenüber Aminogruppen reaktiven Stoffen umgesetzt wurden. Bei bevorzugten Polymerdispersion sind 0,1 bis 15 Äquivalenzprozente der Amingruppen des Polyamins desaktiviert.

Die Desaktivierung kann auf unterschiedliche Art erfolgen, z.B. durch Umsetzung mit Isocyanaten, durch Acylierung z.B. mit Säurechloriden oder polymeren Anhydriden, oder durch Alkylierung z.B. mit Polyepoxiden. Die Desaktivierung kann auch erfolgen durch Umsetzung der Polyamine mit acrylgruppenhaltigen Verbindungen durch eine Michael-Addifiion, im Falle von aromatischen Aminen unter Katalyse durch Säuren.

Eine Desaktivierung mit Isocyanaten kann beispielsweise erfolgen durch Umsetzung mit aliphatischen, cycloaliphatischen oder aromatischen Monoisocyanaten oder Polyisocyanaten (d.h. Verbindungen mit zwei oder mehr Isocyanatgruppen) und deren Prepolymere mit Diolen oder Polyolen. Derartige Umsetzungen sind beispielsweise in der EP 171 015 detailliert beschrieben. Hierbei werden zur Desaktivierung der Oberfläche von festen, feinteiligen Polyaminen unterschüssige Mengen (z.B. mindestens 0,1 oder mindestens 0,2 oder mindestens 0,5 und maximal 25 oder maximal 15 oder maximal 10 Äquivalent-%, bezogen auf die Aminogruppen der Polyamine) wasserunlösliche, flüssige oder feste Mono- oder Polyisocyanate eingesetzt. Geeignete Polyisocyanate sind z.B. diejenigen, die wie oben beschrieben als Komponente (a) zur Herstellung der erfindungsgemäßen Polyurethane eingesetzt werden können. Bevorzugt sind 1,6-Hexamethylendiisocyanat und Isophorondiisocyanat.

Beispiele von für die Desaktivierung der festen Polyamine bevorzugten Isocyanaten sind Polyisocyanate ausgewählt aus den Produktreihen Basonat HI, Basonat IT, Basonat HA, Basonat HB, Basonat HW oder Basonat LR.

In einer Ausführungsform handelt es sich um Polymerdispersionen, die dadurch gekennzeichnet sind, dass
das Polyurethan in einer Menge von 20 bis 60 Gew.% enthalten ist
das feste Polyamin in einer Menge von 1 bis 20 Gew.% enthalten ist und
die Uretdiongruppen in einer Menge von 0,1 bis 5 Gew.% enthalten sind.

Die erfindungsgemäßen Polyurethandispersionen können in Form der wässrigen Dispersionen verwendet werden. Sie können aber auch durch verschiedene Trocknungsverfahren, wie z. B. Sprühtrocknung, Fluidized Spray Drying, Walzentrocknung oder Gefriertrocknung in Pulverform überführt werden. Die so erhaltenen Polymer-Trockenpulver lassen sich vorteilhafterweise durch Redispergieren in Wasser erneut in eine wässrige Dispersion (Sekundärdispersion) überführen. Pulverförmige Copolymere haben den Vorteil einer besseren Lagerfähigkeit, einer einfacheren Transportmöglichkeit und zeigen in der Regel eine geringere Neigung für Keimbefall. Die Herstellung dieser Dispersionen erfolgt durch einfaches Vermischen mit Wasser. Es sind dabei in der Regel nur geringe Scherkräfte erforderlich. Es können die dem Fachmann bekannten Mischeinrichtungen wie einfache Rühreinrichtungen eingesetzt werden.

Die erfindungsgemäßen Polyurethandispersionen sind latent reaktiv indem Sinne, dass unter bestimmten Voraussetzungen eine chemische Reaktion hervorgerufen werden kann. Durch Erhöhung der Temperatur auf oder über die Schmelztemperatur des Polyamins kann eine Reaktion der Aminogruppen mit den Uretdiongruppen eingeleitet oder beschleunigt und dadurch eine Vernetzung bewirkt oder beschleunigt werden. Eine Aktivierung der Vernetzungsreaktion kann auch durch elektromagnetische Strahlung, insbesondere Infrarotstrahlung oder Mikrowellenstrahlung, z.B. Infrarotstrahlung einer Wellenlänge von 780 nm bis 1 mm oder Mikrowellenstrahlung einer Wellenlänge von größer 1 mm bis 1 m erfolgen.

Überraschenderweise zeigt schon der Zusatz von verhältnismäßig geringen Mengen an desaktiviertem Polyamin eine starke Zunahme der mechanischen Festigkeit von Beschichtungen oder Verklebungen, was auf eine signifikante und effektive Vernetzung hinweist.

Die erfindungsgemäßen Polymerdispersionen haben vorzugsweise eine Viskosität in einem Bereich von 10 bis 2000 mPa s, bevorzugt von 100 bis 900 mPa s. Die Bestimmung der Viskosität kann nach DIN EN ISO 3219 bei einer Temperatur von 23 °C mit einem Rotationsviskosimeter erfolgen.

Die Verwendung von desaktivierten Polyaminen führt zu vergleichbar guten Vernetzungseigenschaften wie die Verwendung von freien, nicht desaktivierten Aminen. Aber dadurch, dass die Vernetzung erst bei erhöhter Temperatur oder erst bei Aktivierung durch elektromagnetische Strahlung erfolgt, werden einkomponentige Systeme mit längerer Lager- bzw. Verarbeitungszeit ermöglicht.

Gegenstand der Erfindung ist auch die Verwendung der oben beschriebenen, erfindungsgemäßen Polymerdispersionen als Klebstoff, Beschichtungsmittel oder Dichtungsmittel bzw. zur Herstellung von Klebstoffen, Beschichtungsmitteln oder Dichtungsmitteln. Die erfindungsgemäßen Polymerdispersionen können als Primärdispersion zur Herstellung von Formulierungen, wie Beschichtungsmitteln, Dichtungsmitteln und Klebstoffen eingesetzt werden. Sie lassen sich vorteilhafterweise in der Regel auch in eine feste Form, z.B. ein Pulver, überführen, das sich leicht zu einer Sekundärdispersion redispergieren und so in eine Formulierung, wie ein Beschichtungsmittel, Dichtungsmittel oder einen Klebstoff, einarbeiten lässt.

Gegenstand der Erfindung sind auch Klebstoff-, Beschichtungs- oder Dichtungszusammensetzungen enthaltend eine oben beschriebene, erfindungsgemäße Polymerdispersion und mindestens einen weiteren Zusatzstoff, der ausgewählt ist aus weiteren Bindemitteln, Stabilisatoren, Füllstoffen, Verdickern, Benetzungshilfsmitteln, Entschäumern, Vernetzern, Alterungsschutzmitteln, Fungiziden, Pigmenten, löslichen Farbstoffen, Mattierungsmitteln und Neutralisationsmitteln.

Die weiteren Zusatzstoffe können in einfacher Weise zur erfindungsgemäßen Polyurethandispersion gegeben werden. Als Stabilisatoren sind grundsätzlich solche Stabilisatoren geeignet, wie sie bei wässrigen Dispersionen üblicherweise verwendet werden. Zu sehr lagerstabilen Polymerdispersionszusammensetzungen führen Stabilisatoren ausgewählt aus der Gruppe umfassend Netzmittel, Cellulose, Polyvinylalkohol, Polyvinylpyrrolidon sowie Mischungen davon.

Als weitere Bindemittel, die zusätzlich zu dem Uretdiongruppen enthaltenden Polyurethan verwendet werden können, kommen insbesondere radikalisch polymerisierte Polymere, vorzugsweise in Form ihrer wässrigen Dispersionen in Betracht. Derartige Polymere bestehen vorzugsweise zu mindestens 60 Gew.- % aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Als Polymere insbesondere zu erwähnen sind solche, die zu mehr als 60 Gew.-% aus C₁-C₂₀ Alkyl-(meth)acrylaten aufgebaut sind (Polyacrylate), oder solche, die zu mehr als 60 Gew. % aus Styrol und 1,3-Butadien bestehen (Styrol/Butadien Copolymere, insbesondere carboxylierte Styrol/Butadien Copolymere). Carboxylierte Styrol/Butadien Copolymere sind gebildet aus Styrol, Butadien und mindestens einem ethylenisch ungesättigten, radikalisch polymerisierbaren Monomer mit mindestens einer Carboxylgruppe, z.B. Acrylsäure, Methacrylsäure, Fumarsäure, Itaconsäure etc., vorzugsweise Acrylsäure.

In einer besonderen Ausführungsform enthalten die Klebstoff-, Beschichtungs- oder Dichtungszusammensetzungen keine weiteren Arten von Bindemitteln. In einer anderen Ausführungsform enthalten die Klebstoff-, Beschichtungs- oder Dichtungszusammensetzungen 10 bis 50 Gew.-Teile, oder 20 bis 50 Gew.-Teile, oder 30 bis 50 Gew.-Teile, bezogen auf die Summe aller Polymere, an weiteren Bindemitteln, vorzugsweise Polyacrylate und/oder Styrol/Butadien Copolymere.

Besonders vorteilhaft sind Zusammensetzungen, welche frei von organischen Lösungsmitteln, insbesondere frei von sogenannten VOCs (Volatile Organic Compounds) und/oder frei von Weichmachern sind. Sowohl Weichmacher als auch organische Lösungsmittel sind vom ökotoxikologischen und arbeitshygienischen Standpunkt aus nachteilig, Weichmacher können an die Oberfläche migrieren und zum Versagen einer Verklebung führen oder dazu führen; dass die Oberfläche klebrig wird, was zu Verschmutzungen der Klebfugen führt. Auch Lösungsmittel sind unerwünscht, da sie einerseits zusätzliches Gefahrenpotential beim Aufheizen und bei der Applikation des Klebstoffs mit sich bringen können und weil sie andererseits ebenfalls migrieren und über lange Zeit an die Umwelt und an Materialien, welche in Kontakt mit dem Klebstoff stehen, abgegeben werden können und diese negativ beeinflussen können, beziehungsweise zum Versagen der Verklebung führen. Daher handelt es sich bei den erfindungsgemäßen Zusammensetzungen vorzugweise um rein wässrige Systeme mit Wasser als einzigem Lösungsmittel bzw. als einzigem Dispersionsmedium. Der Feststoffgehalt, das heißt der Gehalt aller Bestandteile außer Wasser oder sonstigen, bei 21 °C und 1 bar flüssigen Stoffen liegt vorzugsweise zwischen 20 und 80 Gew.-%.

Gegenstand der Erfindung ist auch ein Verfahren zum Beschichten, Verkleben oder Abdichten von Substraten, wobei
a) eine oben beschriebene, erfindungsgemäße Polymerdispersion zur Verfügung gestellt wird,
b) die Polymerdispersion auf einem ersten Substrat aufgebracht wird und
c) auf eine Temperatur oberhalb des Schmelzpunktes des festen Polyamins erwärmt wird oder eine Aktivierung durch elektromagnetische Strahlung erfolgt. Dabei kann die Aktivierung durch elektromagnetische Strahlung zu der gewünschten Erwärmung führen.

Gegenstand der Erfindung sind auch Substrate, beschichtet mit einer erfindungsgemäßen, nicht-aktivierten Klebstoffzusammensetzung.

Im Falle eines Verfahrens zum Verkleben von zwei Substraten wird das mit der Polymerdispersion beschichtete erste Substrat mit einem zweiten Substrat in Kontakt gebracht, wobei das Erwärmen auf eine Temperatur oberhalb des Schmelzpunktes des festen Polyamins oder wobei die Aktivierung durch elektromagnetische Strahlung erfolgt, bevor oder nachdem die zwei Substrate miteinander in Kontakt gebracht werden.

Die Substrate können beispielsweise ausgewählt sein aus Polymerfolien, Papier, Metallfolien, Holzfurnier, Faservliesen aus natürlichen oder synthetischen Fasern, festen Formkörpern, z. B. Formteilen aus Metall, lackiertem Metall, Holz, Holzwerkstoffen, Fasermaterialien oder Kunststoff. Besonders bevorzugt als erstes Substrat sind Polymerfolien. Als Polymerfolie werden insbesondere biegsame flächige Kunststoffe in einer Dicke von 0.05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Kunststofffolien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Der Kunststoff der Polymerfolien ist vorzugsweise ein thermoplastischer Kunststoff, z.B. Polyester, wie Polyethylenterephthalat (PET), thermoplastische Polyolefine (TPO) wie Polyethylen, Polypropylen, Polyvinylchlorid, insbesondere Weich-PVC, Polyacetate, Ethylen/Vinylacetat Copolymere (EVA), ASA(Acrylnitril/Styrol/- Acrylsäureester), PUR (Polyurethan), PA(Po)yamid), Poly(meth)acrylate, Polycarbonate, oder deren Kunststofflegierungen, insbesondere auch geschäumte PVC-Folien und geschäumte thermoplastische Polyolefinfolien (TPO). Besonders bevorzugt sind PVC und thermoplastische Polyolefine (TPO). Bei den Formteilen kann es sich auch um Formteile handeln, welche aus synthetischen oder natürlichen Fasern oder Spänen aufgebaut sind, die durch ein Bindemittel zu einem Formteil gebunden sind; insbesondere sind auch Formteile aus Kunststoff, z. B. ABS, geeignet. Die Formteile können eine beliebige Form haben.

Die Beschichtung der Substrate oder Formteile mit dem Klebstoff kann nach üblichen Auftragsverfahren erfolgen, beispielsweise durch ein Sprüh-, Streich-, Rakel-, Stempel-, Walz- oder Gießauftragsverfahren. Bevorzugt ist ein Sprühauftrag.

Die aufgebrachte Beschichtungs- bzw. Klebstoffmenge beträgt vorzugsweise 0,5 bis 100 g/m², besonders bevorzugt 2 bis 80 g/m², ganz besonders bevorzugt 10 bis 70 g/m². Vorzugsweise wird entweder nur ein zu verklebendes Substrat, z.B. nur die Folie oder nur das Formteil einseitig beschichtet. Es kommt jedoch auch eine Beschichtung beider zu verklebender Substrate, bzw. von Folie und Formteil in Betracht. Nach der Beschichtung erfolgt üblicherweise eine Trocknung, vorzugsweise bei Raumtemperatur oder Temperaturen bis zu 80 °C, um Wasser oder sonstige Lösemittel zu entfernen.

Das mit einer erfindungsgemäßen Zusammensetzung beschichtete Substrat oder Formteil kann vor der Vernetzung bzw. vor der Aktivierung gelagert werden. Flexible Substrate können z. B. auf Rollen aufgewickelt werden. Zur Vernetzung bzw. Aktivierung wird die Beschichtung thermisch oder durch elektromagnetische Strahlung aktiviert. Hierfür beträgt die Temperatur in der Beschichtung vorzugsweise mindestens 30°C oder mindestens 50 °C, z.B. von 30 bis 200 °C, oder von 50 bis 180°C oder von 60 bis 80°C.

Die erfindungsgemäßen Polymerdispersionen zeichnen sich aus durch eine vergleichsweise geringe Viskosität, gute Auftragbarkeit auf Substrate, vergleichsweise lange Lager- bzw. Verarbeitungszeit (Topfzeit) und eine thermisch oder durch elektromagnetische Strahlung aktivierbare Vernetzbarkeit.

### Beispiele

Alle Prozentangaben sind Gewichtsangangaben, wenn nichts anderes angegeben ist. Die Angabe eines Gehalts bezieht sich auf den Gehalt in wässriger Lösung oder Dispersion. Die Bestimmung der Viskosität kann nach DIN EN ISO 3219 bei einer Temperatur von 23 °C mit einem Rotationsviskosimeter erfolgen.

### Einsatzstoffe:

- DBTL: Dibutylzinndilaurat
- DETA: Diethylentriamin
- DM PA: Dimethylolpropionsäure
- HDI: Hexamethylendiisocyanat-1,6
- IPDI: Isophorondüsocyanat
- TBOT: Tetrabutylorthotitanat
- TDI: Toluylendiisocyanat
- ADDH: Adipinsäuredihydrazid

### Beispiel 1 Polyurethandispersion PUD1

In einem Rührkolben mit Rückflusskühler und Thermometer wurden 601 g (0,30 mol) eines Polyetherols der OH-Zahl 56 aus Polypropylenoxid, 48,3 g (0,36 mol) DMPA, 0,19 g DBTL, 41,6 g eines HDI-Uretdions des NCO-Gehaltes 22% und 113 g Aceton bei 60°C vorgelegt. Dazu wurden 93,4 g (0,536 mol) TDI gegeben und bei 83°C 330 min lang gerührt. Dann wurde mit 600 g Aceton verdünnt und auf 35°C abgekühlt. Der NCO-Gehalt der Lösung wurde zu 0,182% bestimmt. Hierzu wurden 11,5 g einer 50%igen wässrigen Lösung NaOH sowie 23 g Wasser gegeben. Nach 5 Minuten wurde mit 1163 g Wasser dispergiert. Nach Destillation des Acetons wurde eine wässrige Polyurethandispersion mit einem Festgehalt von 41 % erhalten.

### Beispiel 2 Polyurethandispersion PUD2

In einem Rührkolben mit Rückflusskühler und Thermometer wurden 601 g (0,30 mot) eines Polyetherols der OH-Zahl 56 aus Polypropylenoxid, 48,3 g (0,36 mol) DMPA, 0,19 g DBTL, 11,5 g eines TDI-Uretdions des NCO-Gehaltes 24% und 56 g Aceton bei 60°C vorgelegt. Dazu wurden 109,2 g (0,627 mol) TDI gegeben und bei 92°C 360 min lang gerührt. Dann wurde mit 600 g Aceton verdünnt und auf 35°C abgekühlt. Der NCO-Gehalt der Lösung wurde zu 0,221% bestimmt. Hierzu wurden 11,5 g einer 50%igen wässrigen Lösung NaOH sowie 23 g Wasser gegeben. Nach 5 Minuten wurde mit 1163 g Wasser dispergiert. Nach Destillation des Acetons wurde eine wässrige Polyurethandispersion mit einem Festgehalt von 40% erhalten.

### Beispiel 3 Polyurethandispersion PUD3

In einem Rührkolben mit Rückflusskühler und Thermometer wurden 210 g (0,09 mol) eines Polyesterols der OH-Zahl 48 aus Adipinsäure und Butandiol-1,4, 0,04 g DBTL und 60 g Aceton bei 60°C vorgelegt. Dazu wurden eine Mischung aus 8,7 g (0,05 mol) TDI und 8,4 g (0,05mol) HDI gegeben und bei 67°C 90 min lang gerührt. Dann wurde mit 240 g Aceton verdünnt und auf 35°C abgekühlt. Der NCO-Gehalt der Lösung wurde zu 0,307% bestimmt. Hierzu wurden 11,9 g einer 50%igen wässrigen Lösung des Natriumsalzes der 2'-Aminoethan-2-ethansulfonsäure sowie 30 g Wasser gegeben. Nach 10 Minuten wurde die Lösung mit 5,2 g eines HDI-Uretdions des NCO-Gehaltes 22% versetzt und für 5 min gerührt. Anschließend wird mit 345 g Wasser dispergiert. Nach Destillation des Acetons wurde eine wässrige Polyurethandispersion mit einem Festgehalt von 38% erhalten.

### Beispiel 4 desaktiviertes Amin A1

### Ölphase

- 0,5 g: nichtionisches Tensid (Atlox® 4912)
- 0,04 g: Organisches Polymer, enthaltend pyrogene Kieselsäure(Tego® Foamex 830)
- 37g: Cyclohexan
- 0,12 g: Natriumdioctylsulfosuccinat (Lutensit® A-BO)

### Zulauf 1

- 0,37 g: einer 70%igen Lösung (in Naphta) von 3-Isocyanatmethyl-3,5,5-trimethylcyclohexyl-isocyanat (Basonat® IT 270 S)

Die Ölphase wurde in einer Rührapparatur vorgelegt und unter Rühren wurden 25,7 g einer 97%igen wässrigen Lösung von mikronisiertem 1,12-Diaminododekan (D [4,3] = 38,52 µm) zugegeben. Zulauf 1 wurde zugegeben und es wurde 15 Minuten gerührt. Anschließend wurde die Suspension in eine Kugelmühle gegeben und 15 Minuten mit 3 mm Glaskugeln bei 1600 Upm homogenisiert. Die erhaltene Suspension wurde getrocknet (Entfernung Cyclohexan) und pulverförmig weiterverwendet.

### Beispiel 5 desaktiviertes Amin A2

### Wasserphase

- 1,5 g: Natriumnaphtalensulfonat (Tamol® NN 4501)
- 0,13 g: Organisches Polymer, enthaltend pyrogene Kieselsäure (Tego® Foamex 830)
- 113g: vollentsalztes Wasser
- 0,38 g: Natriumdioctylsulfosuccinat (Lutensit® A-BO)

### Zulauf 1

- 0.15g: 1,6-Hexamethylendiisocyanat (Basonat® HI 100)

Die Wasserphase wurde in einer Rührapparatur vorgelegt und unter Rühren 250 g einer 6%igen wässrigen Suspension von mikronisiertem 1,12-Diaminododekan zugegeben. Zulauf 1 wurde zugegeben und es wurde 15 Minuten gerührt. Anschließend wurde die Suspension in eine Kugelmühle gegeben und 15 Minuten mit 3 mm Glaskugeln bei 1600 Upm homogenisiert. Die erhaltene wässrige Suspension enthielt Kapseln mit einer mittleren Größe von D [4,3] = 40.03 µm.

### Beispiel 6 desaktiviertes Amin A3

Beispiel 6 wurde analog Beispiel 8 durchgeführt, wobei 0,26 g 1,6-Hexamethylendiisocyanat (Basonat® HI 100) anstatt IPDI und 25,5 g Adipinsäuredihydrazid eingesetzt wurden. Die erhaltene Suspension würde getrocknet (Entfernung Cyclohexan) und pulverförmig weiterverwendet.

### Beispiel 7 desaktiviertes Amin A4

Beispiel 7 wurde analog Beispiel 9 durchgeführt, wobei 0,37 g einer 70%igen Lösung (in Naphta) von 3-Isocyanatmethyl-3,5,5-trimethylcyclohexyl-isocyanat (Basonat® IT 270 S) anstatt Basonat® HI 100 eingesetzt wurden.

### Beispiel 8 desaktiviertes Amin A5

### Ölphase

- 0,5 g: nichtionisches Tensid (Atlox® 4912)
- 0,04 g: Organisches Polymer, enthaltend pyrogene Kieselsäure(Tego® Foamex 830)
- 37 g: Cyclohexan
- 0,12 g: Natriumdioctylsulfosuccinat (Lutensit® A-BO)

### Zulauf 1

- 0,26 g: Isophorondiisocyanat (IPDI)

Die Ölphase wurde in einer Rührapparatur vorgelegt und unter Rühren (bei 600 Upm) wurden 25 g mikronisiertes Adipinsäuredihydrazid zugegeben. Zulauf 1 wurde zugegeben und es wurde 15 Minuten gerührt. Anschließend wurde die Suspension in eine Kugelmühle gegeben und 15 Minuten mit 3 mm Glaskugeln bei 1600 Upm homogenisiert. Die erhaltene Suspension wurde getrocknet (Entfernung Cyclohexan) und pulverförmig weiterverwendet. Es wurden Partikel mit einer mittleren Größe von D [4,3] = 22,39 µm erhalten.

### Beispiel 9 desaktiviertes Amin A6

### Wasserphase

- 0,5 g: Natriumnaphtalensulfonat (Tamol® NN 4501)
- 0,04 g: Organisches Polymer, enthaltend pyrogene Kieselsäure (Tego® Foamex 830)
- 37 g: vollentsalztes Wasser
- 0,12 g: Natriumdioctylsulfosuccinat (Lutensit® A-BO)

### Zulauf 1

- 0,26 g: 1,6-Hexamethylendiisocyanat (Basonat® HI 100)

Die Wasserphase wurde in einer Rührapparatur vorgelegt und unter Rühren wurden 25,7 g einer 97%igen wässrigen Lösung von mikronisiertem 1,12-Diaminododekan (D [4,3] = 38,52 µm) zugegeben. Zulauf 1 wurde zugegeben und es wurde 15 Minuten gerührt. Anschließend wurde die Suspension in eine Kugelmühle gegeben und 15 Minuten mit 3 mm Glaskugeln bei 1600 Upm homogenisiert.

### Beispiele 10-16 Polyurethandispersionen B10-16

Aus der Polyurethandispersion PUD1 wurden durch Zusatz von Aminen die Polyurethandispersionen B11 bis B16 gemäß Tabelle 1 hergestellt.

**Tabelle 1: Aminhaltige polyurethandispersionen B10-16**

| | Polyurethandispersion | Amin |
|---|---|---|
| B10 | 100 Gew.Teil PUD1 | - |
| B11 | 95 Gew.Teil PUD1 | 5 Gew.-Teile Adipinsäuredihydrazid (12%ig in Wasser, nicht desaktiviert) |
| B12 | 95 Gew.Teil PUD1 | 5 Gew.-Teile 1,12-Diaminododekan (10%ig in Aceton, nicht desaktiviert) |
| B13 | 95 Gew.Teil PUD1 | 5 Gew.-Teile desaktiviertes Amin A1 |
| B14 | 95 Gew.Teil PUD1 | 5 Gew.-Teile desaktiviertes Amin A2 |
| B15 | 95 Gew.Teil PUD1 | 5 Gew.-Teile desaktiviertes Amin A3 |
| B16 | 95 Gew.Teil PUD1 | 5 Gew.-Teile desaktiviertes Amin A4 |

### Anwendungstechnischen Prüfungen

Zur Beurteilung der Auswirkung der Vernetzung auf die Beschichtungs- bzw. Klebeeigenschaften wurden SAFT-Tests (Shear Adhesion Failure Test) durchgeführt. Hierbei werden zwei Buchenholzplatten durch Nassverklebung so miteinander verbunden, dass die Kontaktfläche 25*25 mm beträgt. Der Klebeverbund wird drei Tage bei 25°C getrocknet und anschließend in einem Ofen so befestigt, dass eine Buchenholzplatte mit einem Gewicht von 1 kg belastet werden kann. Der Verbund wird im Ofen beginnend bei 30°C mit einer Aufheizrate von 0,33°C pro Minute erhitzt. Die Temperatur, bei der sich der Klebeverbund löst, wird als SAFT-Temperatur ermittelt.

Die Ergebnisse sind in Tabelle 2 zusammengestellt.

**Tabelle 2: Ergebnisse der SAFT-Tests**

| Beispiel | Amintyp | SAFT Temperatur in °C |
|---|---|---|
| B10 | kein Amin | 66 |
| B11 | Adipinsäuredihydrazid nicht desaktiviert | 118 |
| B12 | 1,12-Diaminododekan, nicht desaktiviert | 110 |
| B13 | 1,12-Diaminododekan desaktiviert | 123 |
| B14 | 1,12-Diaminododekan desaktiviert | 112 |
| B15 | Adipinsäuredihydrazid desaktiviert | 128 |
| B16 | festes Amin, desaktiviert | 128 |

Die erfindungsgemäßen Beispiele B13 bis B16 zeigen, dass die eingesetzten festen Amine trotz Desaktivierung im Vergleich zu nicht desaktivierten, festen Aminen zu einer Erhöhung der SAFT-Temperaturen führen, was auf eine ähnlich gute und sogar noch etwas bessere Vernetzung hindeutet.

## Patentansprüche

1. Wässrige Polymerdispersion, enthaltend
a) mindestens ein in wässriger Phase dispergiertes Polyurethan mit einer oder mehreren Uretdiongruppen, und
b) mindestens ein festes Polyamin mit desaktivierter Oberfläche, wobei das feste Polyamin einen Schmelzpunkt von größer oder gleich 30 °C aufweist und wobei das feste Polyamin mit desaktivierter Oberfläche partikelförmig vorliegt und ein Teil der Aminogruppen durch Reaktion mit gegenüber Aminogruppen reaktiven Stoffen umgesetzt wurde.

2. Polymerdispersion gemäß Anspruch 1, **dadurch gekennzeichnet, dass** 0,1 bis 15 Äquivalenzprozente der Amingruppen des Polyamins desaktiviert sind.

3. Polymerdispersion gemäß einem der vorhergehenden Ansprüche, **dadurch gekennzeichnet, dass** die Oberfläche des festen Polyamins desaktiviert ist durch Umsetzung mit Isocyanaten, durch Acylierung oder durch Alkylierung.

4. Polymerdispersion gemäß einem der vorhergehenden Ansprüche, **dadurch gekennzeichnet, dass** das feste Polyamin ausgewählt ist aus der Gruppe bestehend aus festen aliphatischen Polyaminen, festen aromatischen Polyaminen, festen Dihydraziden, festen Semicarbaziden, festen Amin-Epoxy-Additionsverbindungen, festen aminofunktionellen Michaels-Additionsverbindungen, festen aminogruppenhaltigen Polymeren und Mischungen von zwei oder mehr dieser Polyamine, wobei die Aminogruppen primäre oder sekundäre Aminogruppen sind und das feste Polyamin einen Schmelzpunkt von mindestens 30 °C aufweist.

5. Polymerdispersion gemäß einem der vorhergehenden Ansprüche, **dadurch gekennzeichnet, dass** die Uretdiongruppen abgeleitet sind von Diisocyanatdimeren, ausgewählt aus der Gruppe bestehend aus 2,4'-Diphenylmethandiisocyanat, 1,6-Hexamethylendiisocyanat, Isophorondiisocyanat, 2,4-Totuylendiisöcyanat, 1,4-Tetramethylendiisocyanat, 4,4'-Diisocyanatodicyclohexylmethan und deren Mischungen.

6. Polymerdispersion gemäß einem der vorhergehenden Ansprüche, **dadurch gekennzeichnet, dass** das Polyurethan gebildet ist aus wenigstens einem Polyisocyanat, wenigsten einem Polyisocyanaturetdion, und wenigstens einem polymeren Polyol, das ausgewählt ist unter Polyesterdiolen, Polyetherdiolen und Gemischen davon.

7. Polymerdispersion gemäß einem der vorhergehenden Ansprüche, **dadurch gekennzeichnet, dass**
das Polyurethan in einer Menge von 20 bis 60 Gew.% enthalten ist das feste Polyamin in einer Menge von 1 bis 20 Gew.% enthalten ist die Uretdiongruppen in einer Menge von 0,1 bis 5 Gew.% enthaltend sind.

8. Polymerdispersion gemäß einem der vorhergehenden Ansprüche, **dadurch gekennzeichnet, dass** das Polyurethan, bezogen auf das Gesamtgewicht der eingesetzten Monomere, zu mindestens 60 Gew.-% aus Diisocyanaten, Polyetherdiolen und/oder Polyesterdiolen aufgebaut ist.

9. Polymerdispersion gemäß einem der vorhergehenden Ansprüche, **dadurch gekennzeichnet, dass** das Polyurethan aufgebaut ist aus
a) wenigstens einem monomeren Diisocyanat,
b) wenigstens einem Diol, wobei die Komponente (b) wenigstens ein Diol mit einem zahlenmittleren Molekulargewicht im Bereich von 500 bis 5000 g/mol aufweist,
c) wenigstens einem von den Monomeren (a) und (b) verschiedenen Monomer mit wenigstens einer Isocyanatgruppe oder wenigstens einer gegenüber Isocyanatgruppen reaktiven Gruppe, das darüber hinaus wenigstens eine hydrophile Gruppe oder eine potentiell hydrophile Gruppe trägt,
d) wenigstens einem Polyisocyanaturetdion,
e) optional wenigstens einer weiteren von den Monomeren (a) bis (d) verschiedenen Verbindung mit wenigstens zwei reaktiven Gruppen, die ausgewählt sind unter alkoholischen Hydroxylgruppen, primären oder sekundären Aminogruppen oder Isocyanatgruppen, und
f) optional wenigstens einer von den Monomeren (a) bis (e) verschiedenen einwertigen Verbindung mit einer reaktiven Gruppe, bei der es sich um eine alkoholische Hydroxylgruppe, eine primäre oder sekundäre Aminogruppe oder eine Isocyanatgruppe handelt.

10. Polymerdispersion gemäß dem vorhergehenden Anspruch, **dadurch gekennzeichnet, dass** das Diol b) ausgewählt ist aus Polytetrahydrofuran, Polypropylenoxid und Polyesterdiolen, ausgewählt aus Umsetzungsprodukten zweiwertiger Alkohole mit zweiwertigen Carbonsäuren und Polyesterdiolen auf Lacton-Basis.

11. Klebstoff-, Beschichtungs- oder Dichtungszusammensetzung enthaltend eine Polymerdispersion gemäß einem der vorhergehenden Ansprüche und mindestens einen weiteren Zusatzstoff, der ausgewählt ist aus weiteren Bindemitteln, Stabilisatoren, Füllstoffen, Verdickern, Benetzungshilfsmitteln, Entschäumem, Vernetzern, Alterungsschutzmitteln, Fungiziden, Pigmenten, löslichen Farbstoffen, Mattierungsmitteln und Neutralisationsmitteln.

12. Substrat, beschichtet mit einer nicht-aktivierten Klebstoffzusammensetzung gemäß dem vorhergehenden Anspruch.

13. Verwendung einer Polymerdispersion gemäß einem der Ansprüche 1 bis 10 als Klebstoff, Beschichtungsmittel oder Dichtungsmittel.

14. Verfahren zum Beschichten, Verkleben oder Abdichten von Substraten, wobei
a) eine Polymerdispersion gemäß einem der Ansprüche 1 bis 10 zur Verfügung gestellt wird,
b) die Polymerdispersion auf einem ersten Substrat aufgebracht wird und
c) auf eine Temperatur oberhalb des Schmelzpunktes des festen Polyamins erwärmt wird oder wobei eine Aktivierung durch elektromagnetische Strahlung erfolgt.

15. Verfahren gemäß dem vorhergehenden Anspruch, **dadurch gekennzeichnet, dass** es sich um Verfahren zum Verkleben von zwei Substraten handelt, wobei das mit der Polymerdispersion beschichtete erste Substrat mit einem zweiten Substrat in Kontakt gebracht wird, wobei das Erwärmen auf eine Temperatur oberhalb des Schmelzpunktes des festen Polyamins oder wobei die Aktivierung durch elektromagnetische Strahlung erfolgt, bevor oder nachdem die zwei Substrate miteinander in Kontakt gebracht werden.

## Claims

1. An aqueous polymer dispersion, comprising
a) at least one polyurethane in dispersion in aqueous phase and having one or more uretdione groups, and
b) at least one solid polyamine with a deactivated surface, where the solid polyamine has a melting point of greater than or equal to 30°C and where the solid polyamine with a deactivated surface is in particle form and some of the amino groups have been converted by reaction with compounds reactive toward amino groups.

2. The polymer dispersion according to claim 1, wherein 0.1 to 15 equivalent percent of the amine groups of the polyamine are deactivated.

3. The polymer dispersion according to either of the preceding claims, wherein the surface of the solid polyamine is deactivated by reaction with isocyanates, by acylation or by alkylation.

4. The polymer dispersion according to any of the preceding claims, wherein the solid polyamine is selected from the group consisting of solid aliphatic polyamines, solid aromatic polyamines, solid dihydrazides, solid semicarbazides, solid amine-epoxy addition compounds, solid amino-functional Michael addition compounds, solid amino-containing polymers, and mixtures of two or more of these polyamines, the amino groups being primary or secondary amino groups and the solid polyamine having a melting point of at least 30°C.

5. The polymer dispersion according to any of the preceding claims, wherein the uretdione groups are derived from diisocyanate dimers selected from the group consisting of 2,4'-diphenylmethane diisocyanate, 1,6-hexamethylene diisocyanate, isophorone diisocyanate, 2,4-tolylene diisocyanate, 1,4-tetramethylene diisocyanate, 4,4'-diisocyanatodicyclohexylmethane and mixtures thereof.

6. The polymer dispersion according to any of the preceding claims, wherein the polyurethane is formed from at least one polyisocyanate, at least one polyisocyanate uretdione, and at least one polymeric polyol selected from polyesterdiols, polyetherdiols and mixtures thereof.

7. The polymer dispersion according to any of the preceding claims, comprising the polyurethane in an amount from 20% to 60% by weight
the solid polyamine in an amount from 1% to 20% by weight
the uretdione groups in an amount from 0.1 to 5% by weight.

8. The polymer dispersion according to any of the preceding claims, wherein the polyurethane, based on the total weight of the monomers used, is synthesized to an extent of at least 60% by weight from diisocyanates, polyetherdiols and/or polyesterdiols.

9. The polymer dispersion according to any of the preceding claims, wherein the polyurethane is synthesized from
a) at least one monomeric diisocyanate,
b) at least one diol, component (b) comprising at least one diol having a number-average molecular weight in the range from 500 to 5000 g/mol,
c) at least one monomer, different from the monomers (a) and (b), having at least one isocyanate group or at least one group reactive toward isocyanate groups, and additionally carrying at least one hydrophilic group or potentially hydrophilic group,
d) at least one polyisocyanate uretdione,
e) optionally at least one further compound, different from the monomers (a) to (d), having at least two reactive groups selected from alcoholic hydroxyl groups, primary or secondary amino groups or isocyanate groups, and
f) optionally at least one monofunctional compound, different from the monomers (a) to (e), having a reactive group which is an alcoholic hydroxyl group, a primary or secondary amino group or an isocyanate group.

10. The polymer dispersion according to the preceding claim, wherein the diol b) is selected from polytetrahydrofuran, polypropylene oxide, and polyesterdiols selected from reaction products of dihydric alcohols with dibasic carboxylated acids, and lactone-based polyesterdiols.

11. An adhesive, coating or sealing composition comprising a polymer dispersion according to any of the preceding claims and at least one further additive selected from further binders, stabilizers, fillers, thickeners, wetting assistants, defoamers, crosslinkers, ageing inhibitors, fungicides, pigments, soluble dyes, matting agents, and neutralizing agents.

12. A substrate coated with a nonactivated adhesive composition according to the preceding claim.

13. The use of a polymer dispersion according to any of claims 1 to 10 as an adhesive, coating material or sealant.

14. A method for coating, adhesively bonding or sealing substrates, where
a) a polymer dispersion according to any of claims 1 to 10 is provided,
b) the polymer dispersion is applied to a first substrate, and
c) the applied dispersion is heated to a temperature above the melting point of the solid polyamide, or where activation takes place by electromagnetic radiation.

15. The method according to the preceding claim, being a method for adhesively bonding two substrates, where the first substrate coated with the polymer dispersion is contacted with a second substrate, the heating to a temperature above the melting point of the solid polyamine, or the activation by electromagnetic radiation, taking place before or after the two substrates are contacted with one another.

## Revendications

1. Dispersion aqueuse de polymère, contenant
a) au moins un polyuréthane dispersé dans la phase aqueuse, comportant un ou plusieurs groupes urétdione, et
b) au moins une polyamine solide à surface inactivée, la polyamine solide présentant un point de fusion supérieur ou égal à 30 °C et la polyamine solide à surface inactivée se trouvant sous forme de particules et une partie des groupes amino ayant été mise à réagir par réaction avec des substances réactives vis-à-vis de groupes amino.

2. Dispersion de polymère selon la revendication 1, **caractérisée en ce que** 0,1 à 15 pour cent en équivalents des groupes amino de la polyamine sont inactivés.

3. Dispersion de polymère selon l'une quelconque des revendications précédentes, **caractérisée en ce que** la surface de la polyamine solide est inactivée par mise en réaction avec des isocyanates, par acylation ou par alkylation.

4. Dispersion de polymère selon l'une quelconque des revendications précédentes, **caractérisée en ce que** la polyamine solide est choisie dans le groupe constitué par des polyamines aliphatiques solides, des polyamines aromatiques solides, des dihydrazides solides, des semi-carbazides solides, des composés d'addition amine-époxy, des composés d'addition de Michael à fonction amino solides, des polymères solides contenant des groupes amino et des mélanges de deux ou plus de deux de ces polyamines, les groupes amino étant des groupes amino primaires ou secondaires et la polyamine solide présentant un point de fusion d'au moins 30 °C.

5. Dispersion de polymère selon l'une quelconque des revendications précédentes, **caractérisée en ce que** les groupes urétdione sont dérivés de dimères de diisocyanates, choisis dans le groupe constitué par le 2,4'-diphénylméthanediisocyanate, le 1,6-hexaméthylène-diisocyanate, l'isophoronediisocyanate, le 2,4-toluylènediisocyanate, le 1,4-tétraméthylène-diisocyanate, le 4,4'-diisocyanatodicyclohexylméthane et des mélanges de ceux-ci.

6. Dispersion de polymère selon l'une quelconque des revendications précédentes, **caractérisée en ce que** le polyuréthane est formé à partir d'au moins un polyisocyanate, d'au moins une polyisocyanate-urétdione et d'au moins un polyol polymère qui est choisi parmi des polyesterdiols, des polyétherdiols et des mélanges de ceux-ci.

7. Dispersion de polymère selon l'une quelconque des revendications précédentes, **caractérisée en ce que** le polyuréthane est contenu en une quantité de 20 à 60 % en poids
la polyamine solide est contenue en une quantité de 1 à 20 % en poids
les groupes urétdione sont contenus en une quantité de 0,1 à 5 % en poids.

8. Dispersion de polymère selon l'une quelconque des revendications précédentes, **caractérisée en ce que** le polyuréthane est constitué à raison d'au moins 60 % en poids, par rapport au poids total des monomères utilisés, de diisocyanates, polyétherdiols et/ou polyesterdiols.

9. Dispersion de polymère selon l'une quelconque des revendications précédentes, **caractérisée en ce que** le polyuréthane est constitué de
a) au moins un diisocyanate monomère,
b) au moins un diol, le composant b) comprenant au moins un diol ayant une masse moléculaire moyenne en nombre dans la plage de 500 à 5 000 g/mole,
c) au moins un monomère différent des monomères a) et b), comportant au moins un groupe isocyanate ou au moins un groupe réactif vis-à-vis de groupes isocyanate, qui en outre porte au moins un groupe hydrophile ou un groupe potentiellement hydrophile,
d) au moins une polyisocyanate-urétdione,
e) en option au moins un autre composé différent des monomères (a) à (d), comportant au moins deux groupes réactifs qui sont choisis parmi des groupes hydroxy alcooliques, des groupes amino primaires ou secondaires ou des groupes isocyanate, et
f) en option au moins un composé monovalent différent des monomères (a) à (e), comportant un groupe réactif qui consiste en un groupe hydroxy alcoolique, un groupe amino primaire ou secondaire ou un groupe isocyanate.

10. Dispersion de polymère selon l'une quelconque des revendications précédentes, **caractérisée en ce que** le diol b) est choisi parmi le polytétrahydrofurane, le polyoxypropylène et des polyesterdiols choisis parmi des produits de réaction d'alcools dihydriques avec des acides dicarboxyliques et des polyesterdiols à base de lactones.

11. Composition d'adhésif, de revêtement ou d'étanchéification, contenant une dispersion de polymère selon l'une quelconque des revendications précédentes et au moins un autre additif qui est choisi parmi d'autres liants, des stabilisants, des charges, des épaississants, des adjuvants de mouillage, des antimousses, des agents de réticulation, des agents antivieillissement, des fongicides, des pigments, des colorants solubles, des agents de matité et des agents de neutralisation.

12. Support, revêtu avec une composition d'adhésif non activée selon la revendication précédente.

13. Utilisation d'une dispersion de polymère selon l'une quelconque des revendications 1 à 10, en tant qu'adhésif, produit de revêtement ou produit d'étanchéification.

14. Procédé pour l'enduction, le collage ou l'étanchéification de supports, dans lequel
a) on fournit une dispersion de polymère selon l'une quelconque des revendications 1 à 10,
b) on applique la dispersion de polymère sur un premier support et
c) on la porte à une température supérieure au point de fusion de la polyamine solide ou dans lequel on effectue une activation au moyen d'un rayonnement électromagnétique.

15. Procédé selon la revendication précédente, **caractérisé en ce qu'**il s'agit d'un procédé pour le collage de deux supports, dans lequel on met en contact avec un second support le premier support revêtu avec la dispersion de polymère, dans lequel le chauffage s'effectue jusqu'à une température supérieure au point de fusion de la polyamine solide ou dans lequel l'activation s'effectue au moyen d'un rayonnement électromagnétique, avant ou après la mise en contact des deux supports l'un avec l'autre.
